# EUROPÄISCHE PATENTSCHRIFT

(11) **EP 0 608 536 B1**
(45) Veröffentlichungstag und Bekanntmachung des Hinweises auf die Patenterteilung: **31.01.1996**
(21) Anmeldenummer: 93120107.3
(22) Anmeldetag: 14.12.1993
(51) Int. Cl.: B23K 9/10

(54) **Lichtbogenschweissgerät mit Halbleiterschaltern in Mittelpunktschaltung**
Arc welding apparatus with semiconducting switches having a central connexion
Appareil de soudage à arc avec commutateurs semi-conducteurs comprenant une connexion centrale

(30) Priorität: 29.01.1993 DE 4302443
(43) Veröffentlichungstag der Anmeldung: 03.08.1994
(73) Patentinhaber: EWM Elektrowerk Mündersbach Verwaltungsgesellschaft mbH, D-56271 Mündersbach (DE)
(72) Erfinder: Szezesny, Michael, D-56271 Mündersbach (DE)
(74) Vertreter: Cohausz & Florack Patentanwälte

(56) Entgegenhaltungen:
- DE-A- 2 913 625
- DE-A- 4 011 461

## Beschreibung

Die Erfindung betrifft ein Lichtbogenschweißgerät mit einem wechselstromgespeisten Gleichrichter, der einen Zwischenkreis speist, einem primärseitig getakteten Stromwandler, dem sekundärseitig zwei parallele Strompfade zugeordnet sind, von denen der Schweißprozeß zeitversetzt in entgegengesetzter Richtung beaufschlagbar ist, wobei jeder der beiden Strompfade eine Freilaufdiode, eine Gleichrichterdiode und einen steuerbaren Halbleiterschalter aufweist, dessen Schalttakt die Arbeitsfrequenz des Lichtbogenschweißgerätes im Wechselstrombetrieb festlegt.

Ein solches Schweißgerät ist aus der deutschen Patentschrift 38 03 447 bekannt. Dieses bekannte Schweißgerät ermöglicht eine Versorgung des Schweißprozesse sowohl mit Gleich- als auch mit Wechselstrom. Wechselstromschweißen ist bei besonderen Anwendungsfällen technologisch vorteilhafter, da zum Beispiel beim Aluminiumschweißen die während einer Schweißperiode in der einen Stromrichtung gebildete Oxidschicht durch den entgegengerichteten Strom der nachfolgenden Periode wieder aufgebrochen wird. Bei dem bekannten Schweißgerät ist zusätzlich ein mechanischer Umschalter vorgesehen, in dessen erster Stellung für Gleichstrombetrieb beide Strompfade gemeinsam den Schweißprozeß speisen und in dessen zweiter, den Wechselstrombetrieb bestimmenden Stellung der erste Halbleiterschalter den Strom des ersten Strompfades und der zweite Halbleiterschalter der Strom des zweiten Strompfades führt. Ein solcher mechanischer Umschalter weist aufgrund seiner endlichen Standzeit im Dauerbetrieb Nachteile auf.

Es ist darüber hinaus ein Lichtbogenschweißgerät bekannt, bei welchem im Sekundärkreis eine aus vier Halbleiterschaltern gebildete Brückenschaltung vorgesehen ist, wobei durch die entsprechende Ansteuerung der Halbleiterschalter sowohl ein Gleichstrom- als auch einen Wechselstrombetrieb ermöglicht wird. Diese Lösung weist den Nachteil auf, daß im Betrieb an jedem der vier Halbleiterschalter Verlustleistung entsteht.

Ein Schweißgerät der eingangs genannten Art ist auch aus der DE-OS 40 11 461 bekannt. Bei diesem Schweißgerät sind zur Versorgung der beiden sekundärseitigen Strompfade stets mindestens zwei separate Stromwandler erforderlich, von denen jeweils immer nur einer in einer Phase leitend ist. Dies bedeutet, daß zur Erhaltung der Funktion dieser Schaltung immer stets zwei Wandler aufgewendet werden müssen.

Demgegenüber liegt der Erfindung die Aufgabe zugrunde, ein Lichtbogenschweißgerät der eingangs genannten Art dahingehend weiterzuentwickeln, daß es einerseits schaltungstechnisch vereinfacht ist und andererseits hinsichtlich der Verlustleistung optimiert ist.

Diese Aufgabe wird bei einem Lichtbogenschweißgerät der eingangs genannten Art in einer ersten Variante der Erfindung dadurch gelöst, daß jeder der beiden Strompfade von räumlich getrennten Sekundärwicklungen gespeist wird, die von einer gemeinsamen Primärwicklung beaufschlagt werden und daß in jedem der beiden sekundärseitigen Strompfade ein separat ansteuerbarer Halbleiterschalter vorgesehen ist, die in einer Mittelpunktschaltung miteinander verknüpft sind, wobei die Halbleiterschalter derart steuerbar sind, daß entweder nur einer der beiden Strompfade leitend ist (DC-Ausgang) oder die beiden Strompfade wechselweise leitend sind (AC-Ausgang).

Nach einer zweiten Variante der Erfindung wird diese Aufgabe dadurch gelöst, daß die beiden Strompfade an einer gemeinsamen Sekundärwicklung liegen, wobei die Primärwicklung von in Brückenschaltung liegenden Primärschaltern derart gespeist wird, daß wechselweise Sekundärspannungen entgegensetzbaren Vorzeichens anliegen und daß in jedem der beiden sekundärseitigen Strompfade ein separat ansteuerbarer Halbleiterschalter vorgesehen ist, die in einer Mittelpunktschaltung miteinander verknüpft sind, wobei die Halbleiterschalter derart steuerbar sind, daß entweder nur einer der beiden Strompfade leitend ist (DC-Ausgang) oder die beiden Strompfade wechselweise leitend sind (AC-Ausgang).

Die Erfindung zeichnet sich dadurch aus, daß der schaltungstechnische Aufwand dadurch herabgesetzt werden kann, daß nunmehr nur noch ein Wandler erforderlich ist.

Durch die Anordnung und die Ansteuerung der Halbleiterschalter wird jeweils erreicht, daß stets nur eine der beiden Strompfade aktiviert ist und der andere entsprechend ausgeblendet wird. Dabei unterscheiden sich die beiden Varianten dadurch, daß gemäß der ersten Variante zwei von einer gemeinsamen Primärwicklung gespeiste separate Sekundärwicklungen vorgsehen sind, während gemäß der zweiten Variante eine gemeinsame Sekundärwickllung vorgesehen ist, die durch primärseitige Taktung entsprechend wechselweise entgegengesetzte Polarität erhält. Beiden Varianten ist gemeinsam, daß stets ein einziger Wandler ausreicht.

Die Erfindung zeichnet sich darüber hinaus dadurch aus, daß allein durch die Ansteuerung der sekundärseitigen Halbleiterschalter sowohl die Betriebsart (Gleichstrom oder Wechselstrom) an sich als auch in der Betriebsart "Wechselstrom" die Arbeitsfrequenz für die Versorgung des Schweißprozesses bestimmt werden können. Zusätzliche Schaltungsmittel, wie ein mechanischer Umschalter, können daher entfallen. In der Betriebsart "Gleichstrom" ist alternativ nur einer der beiden Halbleiterschalter ständig leitend und der andere ständig gesperrt. Hierdurch enststeht nur in dem den leitenden Halbleiterschalter enthaltenden Strompfad Verlustsleistung, während der andere Strompfad keine Verluste erzeugt. Im Wechselstrombetriebszustand sind die Halbleiterschalter wechselweise mit der Arbeitsfrequenz getaktet leitend, wobei während der leitenden Phase des einen Schalters der den anderen Schalter enthaltende Strompfad wiederum keine Verlustleistung hervorruft und umgekehrt. Gegenüber den bekannten Lösungen ergibt sich somit einerseits eine Reduzierung der erforderlichen Schaltelemente und andererseits gegenüber der bekannten Lösung mit der Brückenschaltung eine Reduzierung der Verluste auf den halben Wert.

Die zweite Variante hat den weiteren Vorteil, daß gegenüber der ersten Variante mindestens eine Wicklung gespart werden kann. Auch hierdurch wird der schaltungstechnische Aufwand weiter herabgesetzt. Hinsichtlich des praktischen Schaltungsaufbaus ergibt sich bei der ersten Variante der Erfindung der Vorteil, daß Freilaufdioden, Gleichrichterdioden und sekundärseite Halbleiterschalter auf einem gemeinsamen Kühlkörper angeordnet sein können. Gegenüber der bekannten Lösung kann hierbei ein Kühlkörper eingespart werden.

Vorzugsweise sind die Strompfade wechselweise über sich nicht überlappende Zeitintervalle leitend.

Bei der ersten Variante kann es ferner vorteilhaft sein, daß die Primärwicklung zur Speisung der beiden räumlich getrennten Sekundärwicklungen ebenfalls in zwei Teilwicklungen aufgeteilt ist, die von zwei in Reihe zu ihr liegende gemeinsam getaktete Primärschalter gespeist sind.

Die erfindungsgemäße Lösung läßt sich nicht nur auf die sogenannten Inverterstromquellen anwenden sondern auch auf herkömmliche Stromquellen mit einer Arbeitsfrequenz von 50 Hz, die aus einem Netztransformator und einem herkömmlichen Dreiphasengleichrichter bestehen.

Die Erfindung wird im folgenden anhand einer Zeichnung näher erläutert:
Dabei zeigen:
- Fig. 1: ein erstes Ausführungsbeispiel der ersten Variante einer Schaltung für das erfindungsgemäße Lichtbogenschweißgerät,
- Fig. 2: ein zweites Ausführungsbeispiel der ersten Variante,
- Fig. 3: ein drittes Ausführungsbeispiel der ersten Variante und
- Fig. 4: ein Ausführungsbeispiel der zweiten Variante einer Schaltung für das erfindungsgemäße Lichtbogenschweißgerät.

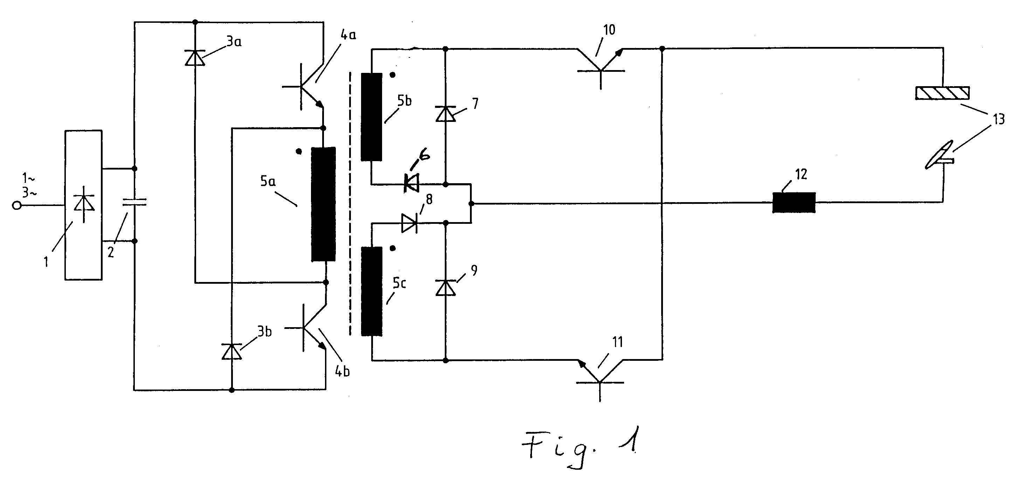

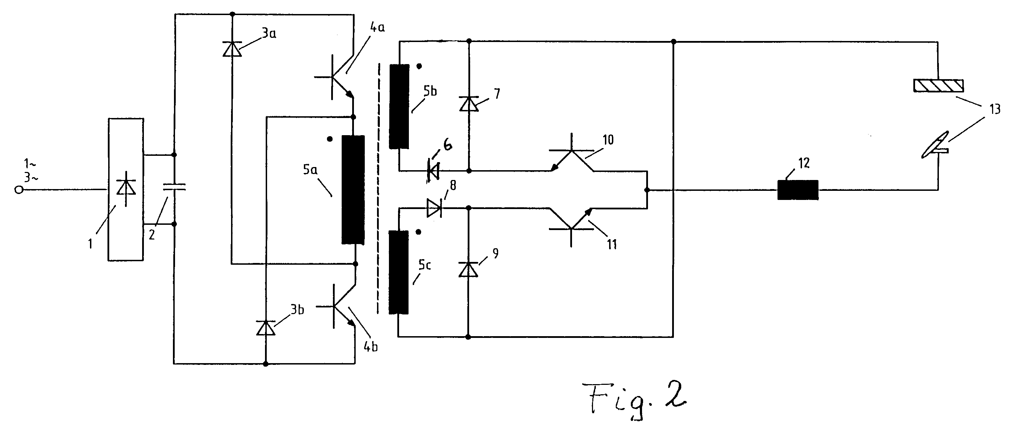

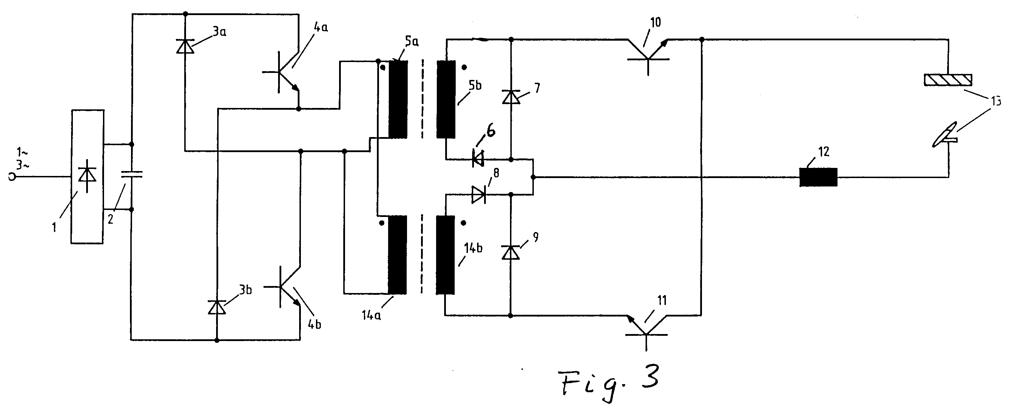

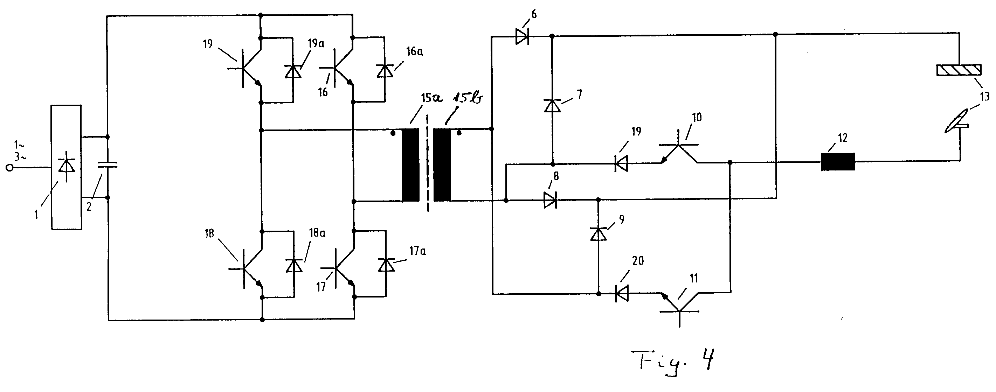

Fig. 1 zeigt einen von einem Ein- oder Dreiphasennetz gespeisten Gleichrichter 1, der sowohl mit gesteuerten als auch mit ungesteuerten Stromventilen ausgerüstet sein kann. Der Gleichrichter 1 speist einen einen Zwischenkreis bildenden Kondensator 2, der seinerseits den ihm nachgeordneten Stromwandler 5a,5b,5c versorgt. Die Primärwicklung 5a des Stromwandlers wird von Primärhalbleiterschaltern 4a,4b getaktet angesteuert. Zusätzlich sind Freilaufdioden 3a,3b vorgesehen, die eine Abmagnetisierung des Stromwandlers 5a,5b,5c während derjenigen Zeitintervalle bewirken, in denen der Wandler nicht durch die Halbleiterschalter 4a,4b getaktet wird. Die Sekundärseite des Stromwandlers wird durch zwei getrennte Sekundärwicklungen 5b,5c gebildet, deren Wicklungssinn gleich ist, wie die durch die entsprechenden Punkte dargestellt ist. An die obere Sekundärwicklung 5b ist ein erster Strompfad angeschlossen, welcher aus den Bauelementen Gleichrichterdiode 6, gesteuertem Halbleiterschalter 10, Schweißprozeß 13, Glättungsdrossel 12 und Freilaufdiode 7 besteht.

An der unteren Sekundärwicklung 5c ist ein zweiter Strompfad angeschlossen, der aus den Elementen Gleichrichterdiode 8, Glättungsdrossel 12, Schweißprozeß 13, gesteuerten Halbleiterschalter 11 und Freilaufdiode 9 besteht.

Die beiden Strompfade sind so geschaltet, daß bei Beaufschlagung des oberen Strompfades der Schweißprozeß 13 in einer ersten Stromrichtung und bei Beaufschlagung des unteren Strompfades in der entgegengesetzten, zweiten Stromrichtung durchflossen wird.

Die Arbeitsweise der erfindungsgemäßen Schaltung für das Lichtbogenschweißgerät gemäß Fig.1 ist nun wie folgt:
Der Stromwandler 5a,5b,5c arbeitet durch die Taktung der primärseiten Halbleiterschalter 4a,4b mit einer Taktfrequenz von etwa 20 kHz. Die Sekundärspannungen werden über die Gleichrichterdioden 6 bzw. 8 gleichgerichtet, so daß an deren Ausgang zwei Gleichspannungen für jeden der beiden Strompfade zur Verfügung stehen. Soll das Lichtbogenschweißgerät mit Gleichstrom gespeist werden, so ist nur eine der beiden sekundärseitigen Halbleiterschalter 10,11 leitend, während der andere dauernd gesperrt ist. Wenn dies beispielsweise der Schalter 10 ist, fließt nur Strom durch den Schweißprozeß in der ersten Richtung. In dem jeweils nicht aktivierten Strompfad kann in diesem Betriebszustand keine Verlustleistung entstehen.

Wenn die Betriebsart Wechselstrom gewünscht ist, werden die sekundärseitigen Halbleiterschalter 10,11 von einer nicht näher dargestellten Steuereinrichtung derart getaktet, daß sie wechselweise leitend sind. Die Taktung erfolgt in der gewünschten Betriebsfrequenz für den Schweißprozeß, beispielsweise 200 Hz. Da diese Frequenz wesentlich niedriger ist als die Taktfrequenz des Stromwandlers, wird die jeweils an den Gleichrichterdioden 6 bzw. 8 zur Verfügung stehende Gleichspannung nahezu unverformt an den Schweißprozeß übertragen. Somit ergibt sich eine nahezu rechteckförmige Arbeitsspannung am Schweißprozeß, die der Frequenz der Taktfrequenz der Halbleiterschalter 10,11 entspricht.

Das in Fig. 2 dargestellte Ausführungsbeispiel unterscheidet sich von dem in Fig. 1 dargestellten nur dadurch, daß die in Mittelpunktsschaltung angeordneten sekundärseitigen Halbleiterschalter 10,11 im Verbindungszweig zwischen der Glättungsdrossel 12 und den jeweiligen Gleichrichterdioden 6,8 angeordnet sind. Diese räumliche Schaltungsanordnung hat den Vorteil, daß Gleichrichterdioden 6,8, Freilaufdioden 7,9 und sekundärseitige Halbleiterschalter 10,11 auf einem einzigen Kühlkörper angeordnet sein können, wobei die zum oberen Strompfad gehörigen Elemente miteinander verbunden und gegenüber den zum unteren Strompfad gehörigen Elementen isoliert sind, die ihrerseits miteinander verbunden sind.

Das in Fig. 3 dargestellte Ausführungsbeispiel unterscheidet sich von den zuvor dargestellten Ausführungsbeispielen dadurch, daß die Primärwicklung durch zwei getrennte Teilwicklungen 5a,14a gebildet ist. Die beiden Teilwicklungen sind parallel zueinander geschaltet und weisen jeweils den entsprechenden Wicklungssinn auf.

Die in Fig. 4 dargestellte zweite Variante der erfindungsgemäßen Schaltung für ein Lichtbogenschweißgerät zeigt ebenso einen von einem Zwischenkreis 2 gespeisten Stromwandler 15a,15b, dessen Primärwicklung von in Brückenschaltung angeordneten Halberleiterschaltern 16,17,18,19 derart gespeist wird, daß sich wechselweise Ströme jeweils mit wechselndem Vorzeichen ergeben, die in die Primärwicklung 15a fließen. Den Halbleiterschaltern 16 - 19 sind jeweils Freilaufdioden 16a - 19a parallel geschaltet. Sekundärseitig sind ebenso wie bei der ersten erfindungsgemäßen Variante zwei parallel geschaltete Strompfade vorgesehen, deren Bauelemente mit den entsprechenden Bezugszeichen versehen sind. Zusätzlich sind in Fig.4 noch Entkopplungsdioden 19,20 vorgesehen, da beide Strompfade gemeinsam an der einzigen Sekundärwicklung 15b angeschlossen sind.

Im Unterschied zur ersten Variante, bei der an den Wicklungen 5b,5c bzw. 5b,14b auf der Sekundärseite jeweils gleichzeitig die induzierten Spannungen für die beiden Strompfade vorhanden sind, ist beim Ausführungsbeispiel nach Fig.4 jeweils zeitversetzt eine induzierte Spannung mit positiver bzw. negativer Vorzeichenorientierung vorhanden, mit denen die beiden Strompfade gespeist werden, wobei während der einen (positiven) Halbwelle des Schweißstromes die Halbleiterschalter 17,19 leitend sind und während der anderen (negativen) Halbwelle die Halbleiterschalter 16,18.

## Patentansprüche

1. Lichtbogenschweißgerät mit einem wechselstromgespeisten Gleichrichter (1), der einen Zwischenkreis (2) speist, einem primärseitig getakteten Stromwandler (5,14,15), dem sekundärseitig zwei parallele Strompfade zugeordnet sind, von denen der Schweißprozeß (13) zeitversetzt in entgegengesetzter Richtung beaufschlagbar ist, wobei jeder der beiden Strompfade eine Freilaufdiode (7,9), eine Gleichrichterdiode (6,8) und einen steuerbaren Halbleiterschalter aufweist, dessen Schalttakt die Arbeitsfrequenz des Lichtbogenschweißgerätes im Wechselstrombetrieb festlegt,
**dadurch gekennzeichnet**, daß jeder der beiden Strompfade von räumlich getrennten Sekundärwicklungen (5b,5c) gespeist wird, die von einer gemeinsamen Primärwicklung beaufschlagt werden und daß in jedem der beiden sekundärseitigen Strompfade ein separat ansteuerbarer Halbleiterschalter (10,11) vorgesehen ist, die in einer Mittelpunktschaltung miteinander verknüpft sind, wobei die Halbleiterschalter (10,11) derart steuerbar sind, daß entweder nur einer der beiden Strompfade leitend ist (DC-Ausgang) oder die beiden Strompfade wechselweise leitend sind (AC-Ausgang).

2. Lichtbogenschweißgerät mit einem wechselstromgespeisten Gleichrichter (1), der einen Zwischenkreis (2) speist, einem primärseitig getakteten Stromwandler (5,14,15), dem sekundärseitig zwei parallele Strompfade zugeordnet sind, von denen der Schweißprozeß (13) zeitversetzt in entgegengesetzter Richtung beaufschlagbar ist, wobei jeder der beiden Strompfade eine Freilaufdiode (7,9), eine Gleichrichterdiode (6,8) und einen steuerbaren Halbleiterschalter aufweist, dessen Schalttakt die Arbeitsfrequenz des Lichtbogenschweißgerätes im Wechselstrombetrieb festlegt,
**dadurch gekennzeichnet**, daß die beiden Strompfade an einer gemeinsamen Sekundärwicklung liegen, wobei die Primärwicklung (15a) von in Brückenschaltung liegenden Primärschalter (16-19) derart gespeist wird, daß wechselweise Sekundärspannungen entgegensetzbaren Vorzeichens anliegen und daß in jedem der beiden sekundärseitigen Strompfade ein separat ansteuerbarer Halbleiterschalter (10,11) vorgesehen ist, die in einer Mittelpunktschaltung miteinander verknüpft sind, wobei die Halbleiterschalter (10,11) derart steuerbar sind, daß entweder nur einer der beiden Strompfade leitend ist (DC-Ausgang) oder die beiden Strompfade wechselweise leitend sind (AC-Ausgang).

3. Lichtbogenschweißgerät nach Anspruch 1,
**dadurch gekennzeichnet**, daß die Strompfade wechselweise über sich nicht überlappende Zeitintervalle leitend sind.

4. Lichtbogenschweißgerät nach Anspruch 3,
**durch gekennzeichnet**, daß die Primärwicklung (5a) von zwei in Reihe zur ihr liegenden gemeinsam getakteten Primärschaltern (4a,4b) gespeist wird.

5. Lichtbogenschweißgerät nach Anspruch 3 oder 4,
**dadurch gekennzeichnet**, daß die Primärwicklung zwei Teilwicklungen (5a,14a) umfaßt, die der jeweiligen Sekundärwicklung zugeordnet sind.

6. Lichtbogenschweißgerät nach Anspruch 1, 3, 4 oder 5,
**dadurch gekennzeichnet**, daß die sekundärseitigen Freilaufdioden (7,9), sekundärseitigen Gleichrichterdioden (6,8) und die sekundärseitigen Halbleiterschalter (10,11) auf einem gemeinsamen Kühlkörper angeordnet sind.

7. Lichtbogenschweißgerät nach einem der vorhergehenden Ansprüche,
**dadurch gekennzeichnet**, daß die aus Gleichrichter (1), Zwischenkreis (2) und Stromwandler (5,14,15) bestehende Inverterstromquelle durch eine aus einem Netztransformator und einem Dreiphasengleichrichter bestehende Stromquelle ersetzt ist.

## Claims

1. An arc welding apparatus with an a.c.-powered rectifier (1) which powers an intermediate circuit (2), a current transformer (5, 14, 15) which is cycled on the primary side and to which two parallel current paths are associated on the secondary side, by means of which the welding process (13) is powerable in the opposite direction in a time-displaced manner, with each of the two current paths comprising a freewheeling diode (7, 9), a rectifier diode (6, 8) and a controllable semiconductor switch whose switching cycle determines the working frequency of the arc welding apparatus in a.c. operation, characterized in that each of the two current paths is powered by spatially separated secondary windings (5b, 5c) which are charged by a common primary winding and that in each of the two current paths on the secondary side there is provided a separately controllable semiconductor switch (10, 11), which switches are mutually linked in a centre tap connection, with the semiconductor switches (10, 11) being controllable in such a way that either only one of the two current paths is conductive (DC output) or both current paths are alternatingly conductive (AC output).

2. An arc welding apparatus with an a.c.-powered rectifier (1) which powers an intermediate circuit (2), a current transformer (5, 14, 15) which is cycled on the primary side and to which two parallel current paths are associated on the secondary side, by means of which the welding process (13) is chargeable in the opposite direction in a time-displaced manner, with each of the two current paths comprising a freewheeling diode (7, 9), a rectifier diode (6, 8) and a controllable semiconductor switch whose switching cycle determines the working frequency of the arc welding apparatus in a.c. operation, characterized in that the two current paths are disposed in a common secondary winding, with the primary winding (15a) being powered by the primary switches (16 to 19) disposed in a bridge circuit in such a way that alternating secondary voltages of opposable signs are applied and that in each of the two current paths on the secondary side there is provided a separately controllable semiconductor switch (10, 11), which switches are mutually linked in a centre tap connection, with the semiconductor switches (10, 11) being controllable in such a way that either only one of the two current paths is conductive (DC output) or both current paths are alternatingly conductive (AC output).

3. An arc welding apparatus as claimed in claim 1, characterized in that the current paths are alternatingly conductive over non-overlapping time intervals.

4. An arc welding apparatus as claimed in claim 3, characterized in that the primary winding (5a) is powered by two jointly cycled primary switches (4a, 4b) being in series thereto.

5. An arc welding apparatus as claimed in claim 3 or 4, characterized in that the primary winding comprises two partial windings (5a, 14a) which are associated with the respective secondary winding.

6. An arc welding apparatus as claimed in claim 1, 3, 4 or 5, characterized in that the freewheeling diodes (7, 9) on the secondary side, the rectifier diodes (6, 8) on the secondary side and the semiconductor switches (10, 11) on the secondary side are arranged on a common heat sink.

7. An arc welding apparatus as claimed in one of the preceding claims, characterized in that the inverter current source consisting of rectifier (1), intermediate circuit (2) and current transformer (5, 14, 15) is replaced by a current source consisting of a power transformer and a three-phase rectifier.

## Revendications

1. Appareil de soudage à l'arc, comprenant un redresseur (1) alimenté en courant alternatif et alimentant un circuit intermédiaire (2), avec un transformateur de courant (5, 14, 15) cadencé du côté primaire et auquel sont associés, du côté secondaire, deux trajets de courant parallèles qui permettent d'alimenter le processus de soudage (13) dans des directions opposées en décalage dans le temps, chacun des deux trajets de courant présentant une diode de roue libre (7, 9), une diode redresseuse (6, 8) et un commutateur semi-conducteur asservissable dont la cadence de commutation définit la fréquence de travail de l'appareil de soudage à l'arc en fonctionnement en courant alternatif,
**caractérisé** en ce que chacun des deux trajets de courant est alimenté par des enroulements secondaires (5b, 5c) spatialement séparés, qui sont alimentés par un enroulement primaire commun, et en ce qu'un commutateur semi-conducteur (10, 11) séparément asservissable est prévu dans chacun des deux trajets de courant du côté secondaire, les commutateurs semi-conducteurs (10, 11) étant mutuellement reliés en montage à prise médiane et pouvant être asservis de telle sorte que soit un seul des deux trajets de courant est conducteur (sortie DC), soit les deux trajets de courant sont alternativement conducteurs (sortie AC).

2. Appareil de soudage à l'arc, comprenant un redresseur (1) alimenté en courant alternatif et alimentant un circuit intermédiaire (2), avec un transformateur de courant (5, 14, 15) cadencé du côté primaire et auquel sont associés, du côté secondaire, deux trajets de courant parallèles qui permettent d'alimenter le processus de soudage (13) dans des directions opposées en décalage dans le temps, chacun des deux trajets de courant présentant une diode de roue libre (7, 9), une diode redresseuse (6, 8) et un commutateur semi-conducteur asservissable dont la cadence de commutation définit la fréquence de travail de l'appareil de soudage à l'arc en fonctionnement en courant alternatif,
**caractérisé** en ce que les deux trajets de courant se trouvent sur un enroulement secondaire commun, l'enroulement primaire (15a) étant alimenté, par des commutateurs primaires (16-19) se trouvant en montage en pont, de telle sorte que des tensions secondaires de signes opposables sont alternativement présentes, et en ce qu'un commutateur semi-conducteur (10, 11) séparément asservissable est prévu dans chacun des deux trajets de courant du côté secondaire, les commutateurs semi-conducteurs (10, 11) étant mutuellement reliés en montage à prise médiane et pouvant être asservis de telle sorte que soit un seul des deux trajets de courant est conducteur (sortie DC), soit les deux trajets de courant sont alternativement conducteurs (sortie AC).

3. Appareil de soudage à l'arc selon la revendication 1, **caractérisé** en ce que les trajets de courant sont alternativement conducteurs pendant des intervalles de temps qui ne se chevauchent pas.

4. Appareil de soudage à l'arc selon la revendication 3, **caractérisé** en ce que l'enroulement primaire (5a) est alimenté par deux commutateurs primaires (4a, 4b) qui se trouvent en série par rapport à lui et sont conjointement cadencés.

5. Appareil de soudage à l'arc selon la revendication 3 ou 4, **caractérisé** en ce que l'enroulement primaire comprend deux enroulements partiels (5a, 15a) qui sont respectivement associés aux enroulements secondaires.

6. Appareil de soudage à l'arc selon la revendication 1, 3, 4 ou 5, **caractérisé** en ce que les diodes de roue libre (7, 9) du côté secondaire, les diodes redresseuses (6, 8) du côté secondaire et les commutateurs semi-conducteurs (10, 11) du côté secondaire sont disposés sur un élément de refroidissement commun.

7. Appareil de soudage à l'arc selon l'une quelconque des revendications précédentes**, caractérisé** en ce que la source de courant inverseur constituée du redresseur (1), du circuit intermédiaire (2) et du transformateur de courant (5, 14, 15) est remplacée par une source de courant constituée d'un transformateur de réseau et d'un redresseur triphasé.
